# EUROPÄISCHE PATENTSCHRIFT

(11) **EP 0 891 040 B1**
(45) Veröffentlichungstag und Bekanntmachung des Hinweises auf die Patenterteilung: **03.07.2002**
(21) Anmeldenummer: 98112109.8
(22) Anmeldetag: 01.07.1998
(51) Int. Cl.: H02P 1/18, E05F 15/16

(54) **Elektrischer Antrieb, insbesondere für ein Garagentor, mit einem Gleichstrommotor**
Electric drive, especially for a garage door, with a direct-current motor
Entraînement électrique, en particulier pour une porte de garage, avec un moteur à courant continu

(30) Priorität: 04.07.1997 DE 19728644
(43) Veröffentlichungstag der Anmeldung: 13.01.1999
(73) Patentinhaber: SOMFY Feinmechanik und Elektrotechnik GmbH, 72108 Rottenburg (DE)
(72) Erfinder: Tobias, Ralph, 76534 Baden-Baden (DE); Siegwart, Bernhard, 71723 Grossbottwar (DE)
(74) Vertreter: Otte, Peter, Dipl.-Ing.

(56) Entgegenhaltungen:
- EP-A1- 0 625 626
- DE-C2- 2 851 032

## Beschreibung

### Stand der Technik

Die Erfindung geht aus von einem elektrischen Antrieb, für ein Garagentor, mit einem Gleichstrommotor, der von einem Gleichrichter gespeist wird, gemäß der in Anspruch 1 definierten Gattung.

Bei einem elektrischen Antrieb für ein Garagentor, mit einem Gleichstrommotor ist es heute üblich, diesen von einem Gleichrichter zu speisen, welcher seinerseits über einen Transformator mit Wechselspannung unterschiedlicher Spannung versorgt wird. Dabei ist bei einem von der Anmelderin auf dem Markt befindlichen Gäragentorantrieb vorgesehen, daß über ein Relais geschaltet, der Gleichrichter in zwei Stufen mit unterschiedlichen Spannungswerten versorgt wird.

Bei einem einfachen Garagentorantrieb wird der Gleichstrommotor nur ein- oder ausgeschaltet. Diese schlagartige Bewegung des Tores verursacht starke Geräusche in der Tormechanik. Das vorstehend genannte, bekannte einstufige Umschalten der Geschwindikgeit mindert diese Geräusche zwar, jedoch wirkt die relativ große, ruckartige Geschwindigkeitsänderung durch den großen Spannungshub nach wie vor störend. Weiterhin werden die Tormechanik, die Kette und der Motor dabei immer noch stark belastet.

### Vorteile der Erfindung

Der erfindungsgemäß gestaltete elektrische Antrieb mit den Merkmalen des Anspruchs 1 hat demgegenüber den Vorteil, daß durch die zumindest zweistufige Gestaltung des Hochfahrens bzw. Abbremsen des Antriebs dieser wesentlich komfortabler und geräuschärmer ist und die verwendeten Bauteile in erheblich größerem Umfang schont. Durch den geringeren Spannungshub wird die Bewegung des Antriebs gleichmäßiger und damit auch weniger stark belastet.

Gemäß der Erfindung ist prinzipiell zur Realisierung vorgesehen, daß der Transformator sekundärseitig mit mehr als zwei Anzapfungen versehen ist und daß diese Anzapfungen stufenweise an den Gleichrichter, insbesondere mittels Relais, gelegt werden.

Durch die in den weiteren Ansprüchen niedergelegten Maßnahmen sind vorteilhafte Weiterbildungen und Verbesserungen des im Anspruch 1 in Verbindung mit Anspruch 2 angegebenen elektrischen Antriebs möglich.

Gemäß einer besonders zweckmäßigen und vorteilhaften Ausgestaltung der Erfindung sind drei Anzapfungen und zwei Relais vorgesehen. Diese Gestaltung ist besonders kostengünstig und für die weitaus meisten Anwendungsprofile ausreichend.

Entsprechend einer vorteilhaften Weiterbildung der Erfindung sind die beiden Relais in Kaskade geschaltet, wobei das erste Relais zwei Spannungsstufen schaltet, die nicht den Maximalwert bilden, und wobei das zweite Relais die Spannungswerte des ersten Relais und die dem Maximalwert entsprechende Spannung schaltet.

Eine besonders zweckmäßige und vorteilhafte Ausgestaltung der Erfindung beinhaltet, daß die Schaltung der beiden Relais durch eine elektronische Steuerung bedarfsgerecht durchgeführt wird. In zweckmäßiger Weiterbildung dieser Ausgestaltung ist die elektronische Steuerung durch einen Prozessor oder durch diskrete Bauelemente realisiert.

Entsprechend einer besonders vorteilhaften Verwendung des erfindungsgemäßen Antriebs ist vorgesehen, daß er für den sanften Anlauf und das sanfte Abbremsen eines Motors verwendet wird, vorzugsweise zum sanften Hochfahren und Abbremsen eines für einen Torantrieb vorgesehenen Gleichstrommotor. Dadurch wird mit einfachen Mitteln kostengünstig ein Antrieb mit Softstart- und Softstop-Eigenschaften geschaffen.

Entsprechend einer vorteilhaften Weiterbildung der Erfindung sind die sekundärseitigen Anzapfungen des Transformators derart gewählt, daß die damit verbundenen Werte der Spannungsstufen ein dem gewünschten Bewegungsprofil entsprechendes sanftes, möglichst ruckfreies Hochfahren bzw. Abbremsen des Gleichstrommotors sicherstellen.

In vorteilhafter Weise ermöglicht die Erfindung den kostengünstigen Aufbau eines Antriebs, der einen an den gewünschten Bewegungsablauf weitgehend komfortabel angepaßten Geschwindigkeitsverlauf ermöglicht, und dies bei weitgehender mechanischer Schonung der beteiligten Bauteile sowie erheblicher Geräuschverminderung.

### Zeichnung

Die Erfindung ist anhand des in der Zeichnung dargestellten Ausführungsbeispiels in der nachfolgenden Beschreibung näher erläutert. Es zeigt:

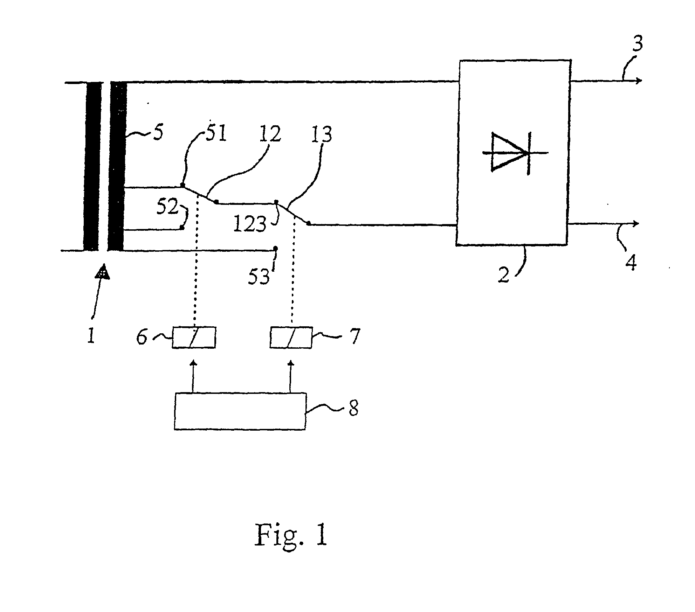

- Fig. 1: schematisch das Blockschaltbild eines erfindungsgemäß gestalteten elektrischen Antriebs.

### Beschreibung des Ausführungsbeispiels

In Fig. 1 ist schematisch das Blockschaltbild eines erfindungsgemäß gestalteten elektrischen Antriebs dargestellt. Über einen Transformator 1 wird eine Gleichrichter 2 mit Wechselspannung versorgt. An den Ausgangsklemmen 3, 4 des Gleichrichters ist ein nicht dargestellter Gleichstrommotor anzuschließen, der Teil des elektrischen Antriebs ist. Die Sekundärseite 5 des Transformators 1 ist mit mehr als zwei Anzapfungen versehen, die mit 51, 52, 53 bezeichnet sind und drei verschiedene Spannungsstufen darstellen. An der Anzapfung 53 liegt der Maximalwert der Spannung an, der von der Sekundärseite 5 des Transformators 1 dem Gleichrichter 2 zugeführt werden kann, an der Anzapfung 51 der Minimalwert und an der Anzapfung 52 ein dazwischen liegender Wert.

Ein erstes Relais 6 schaltet mit seinem Umschaltkontakt 12 zwei Spannungsstufen, und zwar die an den Anzapfungen 51 und 52 anstehenden niedrigeren Werte. Ein zweites Relais 7 schaltet mit seinem Umschaltkontakt 13 zum einen die Maximalspannung an der Anzapfung 52 bzw. zum anderen eine der beiden Spannungen, die an den Anzapfungen 51 oder 52 anstehen und über den Umschaltkontakt 12 auf einen mit ihm verbundenen Kontakt 123 geschaltet ist, auf den Gleichrichter 2. Mittels einer elektronischen Steuerung 8 werden die beiden Relais 6 und 7, die in Kaskade geschaltet sind, angesteuert. Vorzugsweise ist die elektronische Steuerung durch einen Prozessor oder durch diskrete Bauelemente realisiert. Die Ansteuerung erfolgt durch die elektronische Steuerung bedarfgerecht, d. h. entsprechend einem vorherbestimmten Bewegungsablauf und den damit verbundenen und notwendigen Geschwindigkeiten. Dabei ist der zurückzulegende Weg und die Zeit zu berücksichtigen, in der beim Anfahren von Null auf maximale Geschwindigkeit und beim Abbremsen von Maximalgeschwindigkeit auf Null im Haltepunkt gefahren werden kann. Der erfindungsgemäße Antrieb ist somit bevorzugt für den sanften Anlauf und das sanfte Abbremsen eines Motors zu verwenden. Dies kann entsprechend einer bevorzugten Anwendung zum sanften Hochfahren und Abbremsen eines für einen Torantrieb vorgesehenen Gleichstrommotors der Fall sein.

Um die Anwendungspalette der Erfindung zu verbreitern und die Eigenschaften für einen sogenannten Softstart und Softstop zu verbessern, sind in Ausgestaltung des erfindungsgemäßen Antriebs die sekundärseitigen Anzapfungen 51, 52, 53 des Transformators 1 derart gewählt, daß die damit verbundenen Werte der Spannungsstufen ein dem gewünschten Bewegungsprofil entsprechendes sanftes, möglichst ruckfreies Hochfahren bzw. Abbremsen des Gleichstrommotors sicherstellen, wodurch sich bei einem Torantrieb ein sanftes Anfahren und Schließen des Tores realisieren läßt.

## Patentansprüche

1. Elektrischer Antrieb für ein Garagentor mit einem Gleichstrommotor, der von einem Gleichrichter (2) gespeist wird, welcher seinerseits über einen Transformator (1) mit Wechselspannung unterschiedlicher Spannung versorgt wird, wobei der Transformator (1) sekundärseitig mit mehr als zwei Anzapfungen (51, 52, 53) versehen ist und diese Anzapfungen (51, 52, 53) stufenweise durch in Kaskade geschaltete Relais (6,7) an den Gleichrichter (2) gelegt werden.

2. Elektrischer Antrieb nach Anspruch 1, **dadurch gekennzeichnet, daß** drei Anzapfungen (51, 52, 53) und zwei Relais (6, 7) vorgesehen sind.

3. Elektrischer Antrieb nach Anspruch 2, **dadurch gekennzeichnet, daß** die beiden Relais (6, 7) in Kaskade geschaltet sind, wobei das erste Relais (6) zwei Spannungsstufen schaltet, die nicht den Maximalwert bilden, und wobei das zweite Relais (7) die Spannungswerte des ersten Relais (6) und die dem Maximalwert entsprechende Spannung schaltet.

4. Elektrischer Antrieb nach Anspruch 2 oder 3, **dadurch gekennzeichnet, daß** die Schaltung der beiden Relais (6, 7) durch eine elektronische Steuerung (8) bedarfsgerecht durchgeführt wird.

5. Elektrischer Antrieb nach Anspruch 4, **dadurch gekennzeichnet, daß** die elektronische Steuerung (8) durch einen Prozessor oder diskrete Bauelemente realisiert ist.

6. Elektrischer Antrieb nach Anspruch 5, **dadurch gekennzeichnet, daß** er für den sanften Anlauf und das sanfte Abbremsen eines Motors verwendet wird, vorzugsweise zum sanften Hochfahren und Abbremsen eines für einen Torantrieb vorgesehenen Gleichstrommotor.

7. Elektrischer Antrieb nach einem der vorigen Ansprüche, **dadurch gekennzeichnet, daß** die sekundärseitigen Anzapfungen (51, 52, 53) des Transformators (1) derart gewählt sind, daß die damit verbundenen Werte der Spannungsstufen ein dem gewünschten Bewegungsprofil entsprechendes sanftes, möglichst ruckfreies Hochfahren bzw. Abbremsen des Gleichstrommotors sicherstellen.

## Claims

1. An electric drive for a garage door having a d.c. motor which is fed by a rectifier (2), which is in turn supplied with an alternating voltage of a different voltage by way of a transformer (1), the transformer (1) being provided in a secondary circuit with more than two taps (51, 52, 53) and these taps (51, 52, 53) being connected stepwise across the rectifier (2) by cascade-connected relays (6, 7).

2. An electric drive according to Claim 1, **characterised in that** three taps (51, 52, 53) and two relays (6, 7) are provided.

3. An electric drive according to Claim 2, **characterised in that** the two relays (6, 7) are cascade connected, the first relay (6) connecting two voltage steps which do not form the maximum value, and the second relay (7) connecting the voltage values of the first relay (6) and the voltage corresponding to the maximum value.

4. An electric drive according to Claim 2 or 3, **characterised in that** the connection between the two relays (6, 7) is effected as required by an electronic control (8).

5. An electric drive according to Claim 4, **characterised in that** the electronic control (8) is realised by a processor or discrete components.

6. An electric drive according to Claim 5, **characterised in that** it is used for the smooth starting and smooth braking of a motor, preferably for the smooth acceleration and braking of a d.c. motor provided for a door drive.

7. An electric drive according to one of the preceding claims, **characterised in that** the secondary taps (51, 52, 53) of the transformer (1) are selected such that those values of the voltage steps which are connected therewith ensure that smooth acceleration and braking of the d.c. motor is effected in as jolt-free a manner as possible according to the desired movement profile.

## Revendications

1. Entraînement électrique pour une porte de garage comportant un moteur à courant continu alimenté par l'intermédiaire d'un redresseur (2) recevant lui-même une tension alternative de niveau différent par l'intermédiaire d'un transformateur (1),
le secondaire du transformateur (1) ayant plus de deux prises (51, 52, 53), ces prises (51, 52, 53) étant appliquées successivement au redresseur (2) par des relais (6, 7) branchés en cascade.

2. Entraînement électrique selon la revendication 1,
**caractérisé par**
trois prises (51, 52, 53) et deux relais (6,7).

3. Entraînement électrique selon la revendication 2,
**caractérisé en ce que**
les deux relais (6, 7) sont branchés en cascade, le premier relais (6) commutant deux niveaux de tension qui ne correspondent pas à la valeur maximale et le second relais (7) commute la tension du premier relais (6) et une tension correspondant à la valeur maximale.

4. Entraînement électrique selon l'une quelconque des revendications 2 ou 3,
**caractérisé en ce que**
la commutation des deux relais (6,7) est assurée de manière appropriée par une commande électronique (8).

5. Entraînement électrique selon la revendication 4,
**caractérisé en ce que**
la commande électronique (8) est réalisée par un processeur ou des composants discrets.

6. Entraînement électrique selon la revendication 5,
**caractérisé en ce qu'**
il est appliqué pour un démarrage en douceur et un freinage en douceur d'un moteur de préférence pour la montée en vitesse en douceur et le freinage en douceur d'un moteur à courant continu équipant un entraînement de porte.

7. Entraînement électrique selon l'une quelconque des revendications précédentes,
**caractérisé en ce que**
les prises (51, 52, 53) du secondaire du transformateur (1) sont choisies pour que les valeurs des niveaux de tension qui leur correspondent assurent un profil de mouvement souhaité correspondant à une montée en vitesse ou un freinage, en douceur, avec le moins possible de secousses pour le moteur à courant continu.
